(19) Europäisches Patentamt
European Patent Office
Office européen des brevets

(11) Publication number: **0 411 866 A2**

# (12) EUROPEAN PATENT APPLICATION

(21) Application number: **90308350.9**

(51) Int. Cl.5: **C08K 5/524**, C08L 67/02

(22) Date of filing: **30.07.90**

(30) Priority: **31.07.89 JP 199082/89**

(43) Date of publication of application:
**06.02.91 Bulletin 91/06**

(84) Designated Contracting States:
**AT BE CH DE DK ES FR GB GR IT LI LU NL SE**

(71) Applicant: **POLYPLASTICS CO. LTD.**
**3-13, Azuchicho, 2-chome**
**Chuo-Ku Osaka-shi Osaka(JP)**

(72) Inventor: **Togami, Masato**
**885-11, Miyajima**
**Fuji-shi, Shizuoka(JP)**
Inventor: **Nitoh, Toshikatsu**
**3-12-11, Imaizumi**
**Fuji-shi, Shizuoka(JP)**

(74) Representative: **Jackson, Peter et al**
**HYDE, HEIDE & O'DONNELL 10-12 Priests Bridgedge**
**London SW15 5JE(GB)**

(54) **Heat-resistant resin composition.**

(57) A polyester composition resistant to heat and to blistering comprises 95 to 99.999 wt.% of a melt-processable polyester capable of forming the anisotropic phase (a liquid crystal polyester) and 0.001 to 5 wt.% of a phosphorous ester having the formula (1):

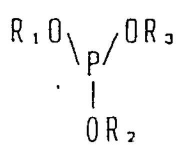

(1)

in which $R_1$, $R_2$ and $R_3$ are, independently of one another, an alkyl, a substituted alkyl, an aryl or a substituted aryl.

EP 0 411 866 A2

Xerox Copy Centre

# HEAT-RESISTANT RESIN COMPOSITION

The present invention relates to a resin composition suitable as a material for moldings which must be subjected to a high-temperature heat treatment step such as soldering or reflow with infrared rays.

Melt-processable polyesters capable of forming an anisotropic molten phase (hereinafter referred to briefly as "liquid crystal polyesters") are often used, by virtue of their good thermal stability at high temperatures, as materials which must be subjected to a high-temperature heat treatment. However, they involve a problem of developing fine bulges (blisters) on the surfaces of molded pieces thereof when they are exposed to high-temperature air or liquids. For example, a large number of blisters are developed when the molded pieces are allowed to stand in air at 200 °C or higher for as long as 30 minutes. Furthermore, they are sometimes problematic in soldering heat resistance and the like.

Thus, the blistering phenomenon is a very big problem with liquid crystal polyesters but no means for effectively suppressing the phenomenon has been discovered hitherto.

The object of the present invention in view of the foregoing problems is to provide a material developing no blisters when heat-treated at a high temperature. A solution has been found in the addition of a small amount of a specific phosphorous ester to a liquid crystal polyester resin. The addition markedly suppresses the blistering of the liquid crystal polyester resin while retaining its other desired good qualities at high temperatures. The present invention has been completed based on this finding.

Specifically, the present invention provides a highly heat-resistant resin composition comprising a melt-processable polyester capable of forming an anisotropic molten phase and 0.001 to 5 wt.% (based on the total amount of the composition) of a phosphorous ester added thereto and represented by the general formula (1).

Phosphorous esters have heretofore been known as antioxidizing agents and weather resistance improvers for polyolefins, ABS resins, etc. However, it has never been expected that specific phosphorous esters are effective in suppressing the blistering of liquid crystal polyesters.

According to the invention there is provided a polyester composition which comprises 95 to 99.999 wt.% of a melt processable polyester being capable of forming the anisotropic phase when it is heated and stressed or a liquid crystal polyester and 0.001 to 5 wt.% of a phosphorous ester having the formula (1):

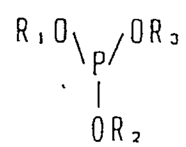

(1)

in which $R_1$, $R_2$ and $R_3$ are, independently of one another, an alkyl, a substituted alkyl, an aryl or a substituted aryl.

It is preferred that $R_1$, $R_2$ and $R_3$ are (a) an alkyl having 1 to 23 carbon atoms, more preferably 6 to 12, (b) an alkyl having 1 to 23 carbon atoms, more preferably 6 to 12, and a substituent, (c) an aryl or (d) an aryl having a substituent. The aryl groups such as phenyl, naphthyl and diphenyl and the substituted aryl groups having a substituent such as an alkyl having 1 to 23 carbon atoms, hydroxy and an alkoxy having 1 to 23 carbon atoms are more preferable.

The invention also provides a polyester composition which comprises 25 to 98.999 wt.% of the melt processable polyester, 0.001 to 5 wt.% of the phosphorous ester and 1 to 70 wt.% of an inorganic filler.

A third composition of the invention comprises 90 to 99.899 wt.% of the polyester, 0.001 to 5 wt.% of the phosphorous ester and 0.1 to 5 wt.% of a silicone.

Phosphorous esters usable in the highly heat-resistant composition of the present invention are presented by the following general formula (1);

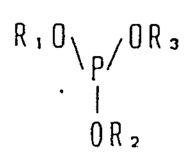

(1)

wherein $R_1$, $R_2$ and $R_3$ which are the same or different from each other stand for each group selected from among the alkyl groups, substituted alkyl groups, aryl groups, and substituted aryl groups, among which alkyl groups having at least one carbon atom, particularly at least 6 carbon atoms, are preferred together with a phenyl group, a naphthyl group, a diphenyl group and alkyl-, hydroxyl- and/or alkoxy- substituted derivatives thereof. Particularly, from the viewpoint of the heat resistance of the composition, all of $R_1$ to $R_3$ are preferably at least one kind of group selected from among aryl groups and substituted aryl groups. Specific examples of the phosphorous esters include triphenyl phosphite, diphenyl decyl phosphite, didecyl phenyl phosphite, tridecyl phosphite, trioctyl phosphite, tridecyl phosphite, trioctadecyl phosphite, trinonylphenyl phosphite. tri(di-tert-butylphenyl) phosphite. and bis(nonylphenyl) (dinonylphenyl) phosphite.

The amount of the phosphorous ester to be added is 0.001 to 5 wt.% (based on the total amount of the composition), particularly preferably 0.01 to 1 wt.%. When it is smaller than 0.001 wt.%, the extent of blister suppression is poor. When it exceeds 5 wt.%, surplus phosphorous ester adversely affects extrudability and moldability and degrades the physical properties of the composition, while spoiling the effect of blister suppression.

The liquid crystal polyester to be used in the present invention is a melt-processable polyester having such properties that the molecular chains of the polymer take regular parallel arrangements in a molten state. The state of molecules being arranged in such a way is often called a liquid crystal state or a nematic phase of a liquid crystal substance. Such polymer molecules are generally long and flat with a considerably high rigidity along the major axes of the molecules. They are generally constituted of a polymer molecule having a plurality of chain-extending bonds which are either coaxial or parallel with each other.

The properties of an anisotropic molten phase can be confirmed by polarimetry wherein crossed polarizers are utilized. More specifically, the confirmation of the anisotropic molten phase can be made by observing a molten sample placed on a Leitz hot stage in an atmosphere of nitrogen with a Leitz polarizing microscope at a magnification of 40. The polymer to be used in the present invention transmits polarized light therethrough even in a static molten state when examined between crossed polarizers to exhibit optical anisotropy.

Liquid crystal polymers suitable for use in the present invention have a tendency to be substantially insoluble in common solvents and hence are unadapted to be used in solution processing. As already described, however, these polymers can be easily processed according to the ordinary melt-processing process.

Preferred examples of the polymer capable of exhibiting an anisotropic molten phase to be used in the present invention include not only aromatic polyesters and aromatic polyester amides but also polyesters partially containing both aromatic polyester and aromatic polyester amide units in each molecule thereof.

Particularly preferred are liquid crystal aromatic polyesters and liquid crystal aromatic polyester amides comprising as the constituent units at least one kind of compound units selected from the group consisting of aromatic hydroxy carboxylic acids, aromatic hydroxy amines, and aromatic diamines.

More specific examples of such polymers include:

1) polyesters mainly comprising at least one kind of unit selected from aromatic hydroxy carboxylic acids and their derivatives;

2) polyesters mainly comprising a) at least one kind of unit selected from aromatic hydroxy carboxylic acids and their derivatives, b) at least one kind of unit selected from aromatic dicarboxylic acids, alicyclic dicarboxylic acids, and their derivatives, and c) at least one kind of unit selected from aromatic diols, alicyclic diols, alophatic diols, and their derivatives;

3) polyester amides mainly comprising a) at least one kind of unit selected from aromatic hydroxy carboxylic acids and their derivatives, b) at least one kind of unit selected from aromatic hydroxy amines, aromatic diamines, and their derivatives, and c) at least one kind of unit selected from aromatic dicarboxylic acids, alicyclic dicarboxylic acids, and their derivatives; and

4) polyester amides mainly comprising a) at least one kind of unit selected from aromatic hydroxy carboxylic acids and their derivatives b) at least one kind of unit selected from aromatic hydroxy amines, aromatic diamines, and their derivatives, c) at least one kind of unit selected from aromatic dicarboxylic acids, alicyclic dicarboxylic acids, and their derivatives, and d) at least one kind of unit selected from aromatic diols, alicyclic diols, sliphatic diols, and their derivatives.

Specific preferred examples of the compound constituting the liquid crystal polyester to be used in the present invention include naphthalene compounds such as 2,6-naphthalenedicarboxylic acid, 2,6-dihydroxynaphthalene, 1,4-dihydroxynapthalene, and 6-hydroxy-2-naphthoic acid; biphenyl compounds such as 4,4′-diphenyldicarboxylic acid and 4,4′-dihydroxybiphenyl; compounds represented by the following general formula (I), (II) or (III):

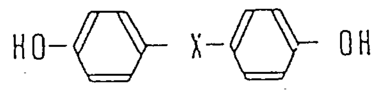 ( I )

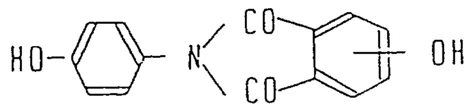 ( II )

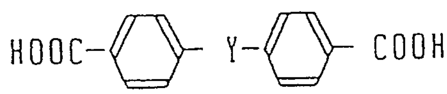 ( III )

wherein X is a group selected from alkylene ($C_1$ - $C_4$), alkylidene, -O-, -SO-, $-SO_2-$, -S-, and -CO-; Y is a group selected from $-(CH_2)_n-$ (N = 1-4) and $-O(CH_2)_n$ O-(n = 1-4); p-substituted benzene compounds such as p-hydroxybenzoic acid, terephthalic acid, hydroquinone, p-aminophenol and p-phenylenediamine; nuclear-substituted benzene compounds of those mentioned above (the substituent being selected from chlorine, bromine, methyl, phenyl, and 1-phenylethyl); and m-substituted benzene compounds such as isophthalic acid and resorcinol.

The liquid crystal polyester to be used in the present invention may partially comprise, in addition to the foregoing constituent units, polyalkylene terephthalate units incapable of exhibiting an anisotropic molten phase in each molecular chain thereof. In this case, the number of carbon atoms in the alkyl group is 2 to 4.

More preferred are those liquid crystal polyesters comprising as the essential constituent units at least one kind of compound units selected from naphthalene compounds, biphenyl compounds and p-substituted benzene compounds among the above-mentioned constituent units. Among the p-substituted benzene compounds, p-hydroxybenzoic acid, methylhydroquinone and 1-phenylethylhydroquinone are particularly preferred.

Japanese Patent Publication No. 36,633/1988 discloses specific examples of compounds having an ester-forming functional group constituent units and those of polyesters capable of forming an anisotropic molten phase which can be preferably used in the present invention.

In general, the weight-average molecular weight of the liquid crystal polyester suitably used in the present invention is about 2,000 to 200,000, prefereably about 10,000 to 50,000, particularly preferably about 20,000 to 25,000. On the other hand the molecular weight of the suitable aromatic polyester amide is generally about 5,000 to 50,000, preferably about 10,000 to 30,000, for example, 15,000 to 17,000.

The molecular weight can be determined according to gel permeation chromatography or other standard measurement methods not involving the formation of a solution of a polymer, such as infrared spectroscopic quantitative determination of the thermal groups of a polymer wherein a compression-molded film thereof is used. Alternatively, the molecular weight of a polymer can be determined using a solution thereof in pentafluorophenol according to the light scattering method.

When the aforementioned aromatic polyester or polyester amide is dissolved in a concentration of 0.1 wt.% in pentafluorophenol at 60 °C, the resulting solution generally shows a logarithmic viscosity (I.V.) of at least about 2.0 dl/g, for example, 2.0 to 10.0 dl/g.

The liquid crystal polyester to be used in the present invention may further comprise another adjuvant thermoplastic resin added thereto within the scope of the present invention in such an amount as not to defeat the object of the present invention.

The kind of thermoplastic resin that may be used in the case is not particularly restricted. Examples of the thermoplastic resin include polyolefins such as polyethylene and polypropylene; aromatic polyesters prepared, for example, from aromatic dicarboxylic acid(s) and diol(s), such as polyethylene terephthalate and polybutylene terephthalate or from hydroxycarboxylic acid(s); and other resins such as polyacetal (homo-or co polymers), polystyrene, polyvinyl chloride, polyamide, polycarbonate, ABS, polyphenylene oxide, polyphenylene sulphide and fluororesin. These thermoplastic resins may be used either alone or in mixture.

The liquid crystal polyester, which is a high-strength material by virtue of the self-reinforcing effect of its peculiar molecular arrangement, is so low in both its linear expansion coefficient and its molding shrinkage factor as to provide only a little dimensional warpage. Furthermore, it has such a heat resistance as to resist temperatures of 220 °C or higher despite its good flowability due to its low melt viscosity. Moreover, it is

very chemically stable as is evident from its good chemical resistance, weather resistance and hot water resistance, and is a material having no influences on other materials.

The liquid crystal polyester resin composition of the present invention may further be blended with any of various fibrous, powdery, and platy inorganic fillers according to the purpose of application thereof.

Examples of the fibrous fillers include glass fibers, asbestos fibers, silica fibers, silica-alumina fibers, alumina fibers, zirconia fibers, boron nitride fibers, silicon nitride fibers, boron fibers, potassium titanate fibers, and other inorganic fibrous substances including fibrous materials made of a metal such as stainless steel, aluminium, titanium, copper or brass.

Examples of the powdery fillers include carbon black; graphite; silica; quartz powder; glass beads; milled glass fiber, glass balloons; glass powder; silicates such as calcium silicate, aluminum silicate, kaolin, talc, clay, diactomaceous earth and wollastonite; metallic oxides such as iron oxide, titanium oxide, zinc oxide, antimony trioxide and alumina; metallic carbonates such as calcium carbonate and magnesium carbonate; ferrite; silicon carbide; silicon nitride; boron nitride; and various metallic powders.

Examples of the platy fillers include mica, glass flake, and various metallic foils.

These inorganic fillers may be used either alone or in combination.

The inorganic filler that may be used in the present invention may be combined with a known surface treating agent according to desirable physical properties. Examples of the surface treating agent include functional compounds such as epoxy compounds, isocyanate compounds, titanate compounds and silane compounds.

The filler may be either preliminarily surface treated or admixed with a surface treating agent simultaneously with the preparation of materials.

The amount of the inorganic filler that may be added is 1.0 to 70 wt.% based on the total amount of the composition.

The resin composition of the present invention is preferably blended with a silicone for the purpose of lowering the strain and stress of the resin that would otherwise be developed during molding and solidification as well as during a service wherein a rapid temperature change occurs. Examples of the silicone herein mentioned include silicone oils, silicone rubbers, and silicone resins. They are polyorganosiloxanes comprising as the main constituent dimethylpolysiloxane, which may have a hydrogen atom, and alkyl group, an aryl group, a halogenated alkyl group, a halogenated aryl group, an amino-modified alkyl group, a mecapto-modified alkyl group, an epoxy-modified alkyl group at least partially in the side chains, such as the methyl groups, and/or the main chain terminals thereof, which may be substituted with at least one compound selected from polyether-modified compounds, alcohol-modified compounds and ester-modified compounds, and/or which may have a crosslinked or grafted structure.

The viscosity of a silicone oil that may be used ranges from $5 \times 10^{-7}$ to 1 $m^2/s$ (0.5 to 1,000,000 cSt), preferably $5 \times 10^{-4}$ to $6 \times 10^{-1}$ $m^2/s$ (500 to 600,000 cSt). It is particularly preferably $1 \times 10^{-3}$ to $1 \times 10^{-1}$ $m^2/s$ (1,000 to 100,000 cSt.) from the viewpoint of extrudability, moldability and little liability of the silicone to ooze out of a molded resin.

The amount of the silicone oil is preferably 0.1 to 5 wt.%, more preferably 0.5 to 3 wt.%, based on the total amount of the composition.

A silicone rubber that may be used in the present invention is preferably in a powdery form. Examples of the silicon rubber include millable silicone rubbers prepared by kneading an organopolysiloxane having a high degree of polymerization together with an inorganic filler and a curing agent and heat vulcanizing the resulting kneaded mass to effect crosslinking thereof, and other silicone rubbers prepared by crosslinking at least one organopolysiloxane having reactive groups in the presence of a catalyst through heating, irradiation with ultraviolet ray or the like.

Particularly preferred are adduct type silicone rubbers crosslinked in the presence of a Platinum compound catalyst through a hydrosilylation addition reaction between unsaturated groups such as vinyl groups and

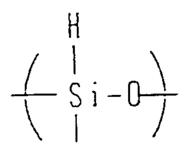

groups. The powdery silicone rubber preferably has an average particularly size of 0.1 to 100μm, particularly preferably 1 to 20 μm.

The amount of the silicone rubber is preferably 1 to 20 wt.%, more preferably 2 to 15 wt.%, based on

the total amount of the composition.

A silicone resin that may be used in the present invention is a polyorganosiloxane having a highly reticulated three dimensional structure and is preferably in a powdery form. The average particle size of the silicone resin is preferably 0.1 to 100 µm, particularly preferably 1 to 20 µm.

The amount of the silicone resin is preferably 1 to 20 wt.% based on the total amount of the composition.

The composition of the present invention may further comprise at least one common additive selected from antioxidizing agents, thermal stabilizers, ultraviolet absorbers, lubricants, release agents, colorants including dyes and pigments, fire retardants, auxiliary fire retardants, antistatic agents, and heat-resistant organic fillers.

The liquid crystal polyester resin composition of the present invention causes no blistering even when used as a material subjected to a high-temperature heat treatment such as soldering or reflow with infrared rays, and hence can be utilized in various electronic and electric components and automobile parts used at high temperatures in most cases and is useful as a material for medical instruments.

## Examples

The following non-limiting Examples further illustrate the present invention.

The liquid crystal polyester used in the Examples and Comparative Examples have the following constituent units:

A : 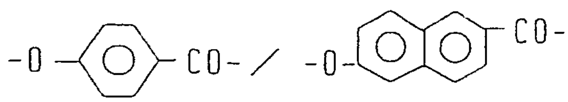 = 70/30

B : 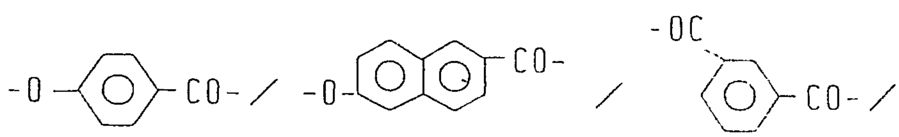

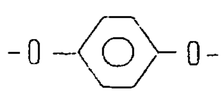 = 60/20/10/10

C : 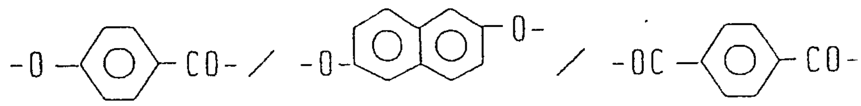

= 60 / 20 / 20

D : 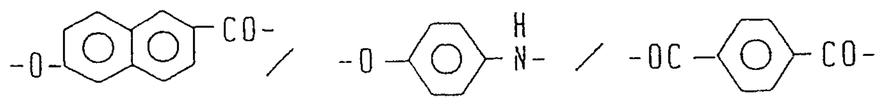

= 70 / 15 / 15

E : 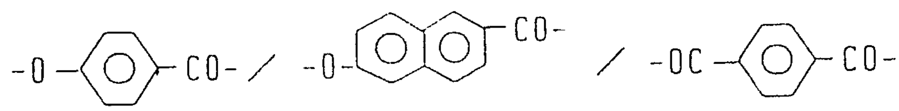

= 70 / 26 / 4

F : 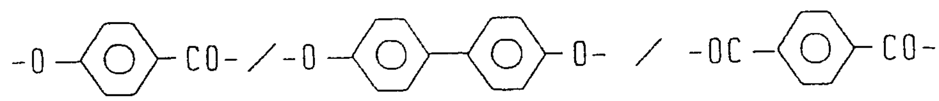

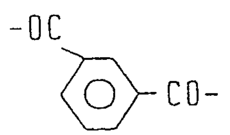 = 65 / 15 / 15 / 5

G : 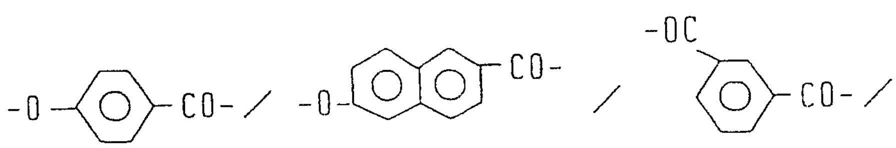

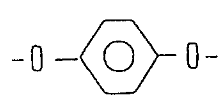 = 35 / 5 / 30 / 30

(The figures represent molar ratios.)

Examples 1 to 12

A liquid crystal polyester resin A which will be described later was mixed with other components listed

in Table 1, followed by pelletization with a common extruder. Thereafter, the resulting pellets were molded into flate plates of 50 mm x 50 mm x 3mm with a common injection molding machine.

Subsequently, some plates were dipped one by one for 10 seconds in a solder bath whose temperature was varied every one plate at intervals of 10 °C. In this manner, the maximum temperature was found up to which no blistering was observed with the naked eye.

Another plate was allowed to stand in an air oven at 270 °C for 30 minutes to evaluate with the naked eye whether blistering occured or not. The evaluation was marked with one of two ratings: O (no recognizable blistering) and X (recognizable blistering).

The results are shown in Table 1.

Examples 13 to 18

Substantially the same procedure of producing flat plates as that of Example 2 was repeated except that each of liquid crystal polyester resins B to G was used in place of the resin A, followed by the evaluation of the resulting plates. The results are shown in Table 2.

Comparative Examples 1 to 5

Substantially the same procedure of producing flat plates as that of the Examples was repeated except that the recipe of the composition was varied as specified in Table 3, followed by the evaluation of the resulting plates. The results are shown in Table 3.

The silicone rubber used herein was a powdery silicone rubber (average particle size 8μm) crosslinked in the presence of a platinum compound catalyst through an addition reaction between a vinyl-containing dimethylpolysiloxane and dimethylpolysiloxane having

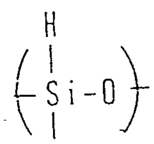

groups.

Table 1

| Ex. | : | Liquid crystal polymer | Phosphorous ester | | | | Filler amt. (wt.%) | Silicone amt. (wt.%) | Results | |
|---|---|---|---|---|---|---|---|---|---|---|
| | | | $R_1$ | $R_2$ | $R_3$ | amt. (wt.%) | | | Maximum temp. (°C) | Visual evaluation |
| Ex. | 1 | A | 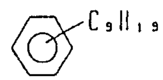 | ditto | ditto | 0.5 | — | — | 280 | ○ |
| | 2 | A | 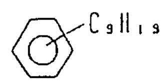 | ditto | ditto | 0.5 | glass fiber 30 | — | 290 | ○ |
| | 3 | A | 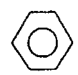 | ditto | ditto | 0.5 | glass fiber 30 | — | 280 | ○ |
| | 4 | A | 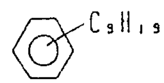 | ditto | 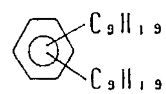 | 0.5 | glass fiber 30 | — | 280 | ○ |
| | 5 | A | 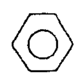 | ditto | $C_{10}H_{21}$ | 0.5 | glass fiber 30 | — | 270 | ○ |
| | 6 | A | 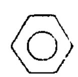 | $C_{10}H_{21}$ | ditto | 0.5 | glass fiber 30 | — | 270 | ○ |

Table 1 (cont'd)

| | | Liquid crystal polymer | Phosphorous | | | | Filler amt. (wt.%) | Silicone amt. (wt.%) | Results | |
|---|---|---|---|---|---|---|---|---|---|---|
| | | | $R_1$ | $R_2$ | $R_3$ | amt. (wt.%) | | | Maximum temp. (°C) | Visual evaluation |
| Ex. | 7 | A | $C_{10}H_{21}$ | ditto | ditto | 0.5 | glass fiber 30 | — | 270 | ○ |
| | 8 | A | 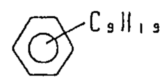 | ditto | ditto | 0.01 | glass fiber 30 | — | 260 | ○ |
| | 9 | A | 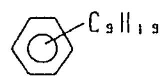 | ditto | ditto | 1.0 | glass fiber 30 | — | 280 | ○ |
| | 10 | A | 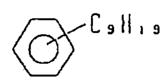 | ditto | ditto | 0.5 | silica 30 | — | 290 | ○ |
| | 11 | A | 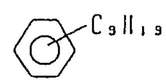 | ditto | ditto | 0.5 | — | silicone rubber 10 | 290 | ○ |
| | 12 | A | 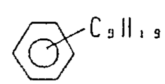 | ditto | ditto | 0.5 | glass fiber 30 | silicone rubber 10 | 300 | ○ |

Table 2

| Ex. | | Liquid crystal polymer | Phosphorous R1 | Phosphorous R2 | Phosphorous R3 | Phosphorous amt. (wt.%) | Filler amt. (wt.%) | Silicone amt. (wt.%) | Results Maximum temp. (°C) | Results Visual evaluation |
|---|---|---|---|---|---|---|---|---|---|---|
| Ex. | 13 | B | 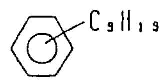 | ditto | ditto | 0.5 | glass fiber 30 | — | 280 | ○ |
| | 14 | C | 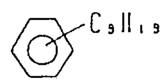 | ditto | ditto | 0.5 | glass fiber 30 | — | 290 | ○ |
| | 15 | D | 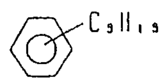 | ditto | ditto | 0.5 | glass fiber 30 | — | 280 | ○ |
| | 16 | E | 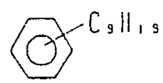 | ditto | ditto | 0.5 | glass fiber 30 | — | 270 | ○ |
| | 17 | F | 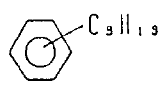 | ditto | ditto | 0.5 | glass fiber 30 | — | 270 | ○ |
| | 18 | G | 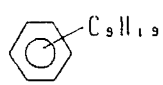 | ditto | ditto | 0.5 | glass fiber 30 | — | 280 | ○ |

Table 3

| | | Liquid crystal polymer | Phosphorous | | | | Filler amt. (wt.%) | Silicone amt. (wt.%) | Results | |
|---|---|---|---|---|---|---|---|---|---|---|
| | | | R₁ | R₂ | R₃ | amt. (wt.%) | | | Maximum temp. (°C) | Visual evaluation |
| Comp. Ex. | 1 | A | not used | | | — | — | — | 240 | × |
| | 2 | A | not used | | | — | glass fiber 30 | — | 250 | × |
| | 3 | A | 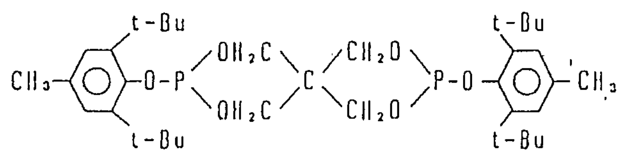 | | | 0.5 | glass fiber 30 | — | 240 | × |
| | 4 | A | pentaerythrityl tetrakis[3-(3,5-di-t-butyl-4-hydroxyphenyl)propionate] | | | 0.5 | glass fiber 30 | — | 230 | × |
| | 5 | A | 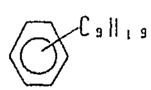 | ditto | ditto | 6.0 | glass fiber 30 | — | 240 | × |

## Claims

1. A polyester composition which comprises 95 to 99.999 wt.% of a melt-processable polyester being capable of forming the anisotropic phase when it is heated and stressed and 0.001 to 5 wt.% of a phosphorous ester having the formula (1).

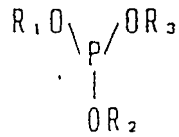

(1)

in which $R_1$, $R_2$ and $R_3$ are, independently of one another, an alkyl, a substituted alkyl, an aryl or a substituted aryl.

2. A polyester composition as claimed in claim 1, in which the melt-processable polyester comprises at least one kind of constituent unit selected from naphthalene compounds, biphenyl compounds and p-substituted benzene compounds.

3. A polyester composition as claimed in claim 1 or claim 2, in which $R_1$, $R_2$ and $R_3$ in the formula (1) are, independently of one another, an alkyl having 1 to 23 carbon atoms, an alkyl having 1 to 23 carbon atoms and a substituent, an aryl or an ayl having a substituent.

4. A polyester composition as claimed in claim 3, in which $R_1$, $R_2$ and $R_3$ are, independently of one another, an alkyl having 6 to 12 carbon atoms, an alkyl having 6 to 12 atoms and a substituent, phenyl, naphthyl, diphenyl or an aryl having a substituent.

5. A polyester composition as claimed in claim 3, in which $R_1$, $R_2$ and $R_3$ are, independently of one another, phenyl, naphthyl or diphenyl and have a substituent selected from an alkyl having 1 to 23 carbon atoms, hydroxy and an alkoxy having 1 to 23 carbon atoms.

6. A polyester composition as claimed in any preceding claim, in which the amount of the phosphorous ester is 0.01 to 1 wt.%.

7. A polyester composition as claimed in any preceding claim, which further comprises 1 to 70 wt.% of an inorganic filler.

8. A polyester composition as claimed in in any preceding claim, which further comprises 0.1 to 5 wt.% of a silicone.

9. A polyester composition as claimed in claim 8, in which the silicone is a silicone rubber in powder form.

10. A polyester composition as claimed in claim 8 or claim 9, in which the silicone is an adduct type silicone rubber cross-linked in the presence of a platinum compound catalyst through a hydrosilylation addition reaction between unsaturated groups such as vinyl groups and

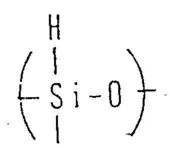

groups.